# EUROPEAN PATENT SPECIFICATION

(11) **EP 0 658 880 B1**
(45) Date of publication and mention of the grant of the patent: **06.10.1999**
(21) Application number: 94917163.1
(22) Date of filing: 07.06.1994
(51) Int. Cl.: G11B 5/09

(54) **RECORDING AND REPRODUCING DEVICE**
AUFZEICHNUNG- UND WIEDERGABEVORRICHTUNG
DISPOSITIF D'ENREGISTREMENT ET DE LECTURE

(30) Priority: 07.06.1993 JP 16320093; 07.03.1994 JP 6202794
(43) Date of publication of application: 21.06.1995
(73) Proprietor: SONY CORPORATION, Tokyo 141 (JP)
(72) Inventor: INOUE, Hajime, Shinagawa-ku Tokyo 141 (JP); SHIMA, Hisato, Shinagawa-ku Tokyo 141 (JP); KANOTA, Keiji, Shinagawa-ku Tokyo 141 (JP); KUBOTA, Yukio, Shinagawa-ku Tokyo 141 (JP); SHIMAZU, Akira, Shinagawa-ku Tokyo 141 (JP)
(74) Representative: Cotter, Ivan John
(86) International application number: JP9400914
(87) International publication number: WO9429854

(56) References cited:
- JP-A- 3 113 804
- JP-A- 61 139 906
- JP-A- 63 029 376
- DATABASE WPI Section EI, Week 9224, Derwent Publications Ltd., London, GB; Class T03, AN 92-200396 & WO-A-92 09074 (WANGTEK INC.) 29 May 1992
- PATENT ABSTRACTS OF JAPAN vol. 17, no. 408 (P-1582) 29 July 1993 & JP-A-05 073 864 (MATSUSHITA ELECTRIC IND. CO. LTD.) 26 March 1993
- DATABASE WPI Section EI, Week 9445, Derwent Publications Ltd., London, GB; Class W04, AN 94-359961 & EP-A-0 625 850 (MATSUSHITA ELEC. IND. CO. LTD.) 23 November 1994
- DATABASE WPI Section EI, Week 9505, Derwent Publications Ltd., London, GB; Class T03, AN 95-036768, XPDW: AN 95- & WO-A-94 29858 (SONY CORP.) 22 December 1994

## Description

This invention relates to recording and reproducing apparatus. A preferred form of implementation of the invention described hereinbelow provides such an apparatus which can efficiently record digital data supplied and can verify whether the recorded digital data has been correctly recorded or not.

A digital recording and reproducing apparatus for recording transmitted digital image data and digital audio data onto a recording medium such as a magnetic tape or the like and for reproducing the digital data recorded on the recording medium is known.

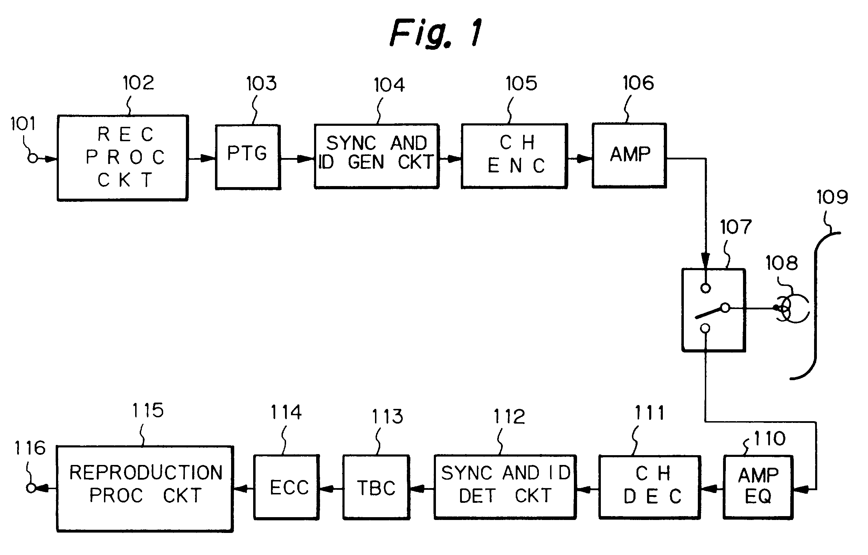

An example of a block diagram of such a digital recording and reproducing apparatus is shown in Fig. 1. In Fig. 1, in a recording system of digital data, digital data transmitted via an input terminal 101 is subjected to a predetermined process in a recording processing circuit 102. A parity having a product code construction generated by a parity generating circuit 103 is added to output data of the recording processing circuit 102. In a sync and ID generating circuit 104, a sync code and an ID are added to the data to which the parity was added. Output data of the sync and ID generating circuit 104 is subjected to a parallel/serial conversion and a conversion to a recording code in a channel encoder 105. After the data was amplified by an amplifier 106, the data is recorded on a magnetic tape 109 through a recording side terminal R of a switch 107 and a magnetic head 108.

In a reproduction system of image data and audio data in a digital recording and reproducing apparatus R, the recording data recorded on the magnetic tape 109 is supplied to an amplifier and equalizer 110 through the magnetic head 108 and a reproducing side terminal (P) of the switch 107 and is subjected to an amplification and a correction of frequency characteristics. Output data of the amplifier and equalizer 110 is subjected to a decoding of a recording code and a serial/parallel conversion in a channel decoder 111 and is supplied to a sync and ID detecting circuit 112. In the sync and ID detecting circuit 112, a sync code and the ID in the data are detected and supplied to a TBC (Time Base Corrector) circuit 113 together with the reproduction data. In the TBC circuit 113, a time base fluctuation for the data is eliminated. Output data of the TBC circuit 113 is subjected to an error correcting process using a product code in an ECC circuit 114 and, after that, the data is supplied to an output terminal 116 through a reproduction processing circuit 115.

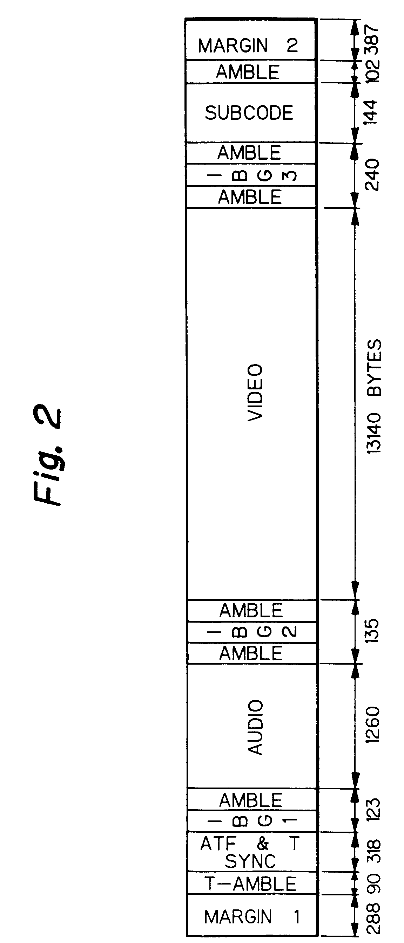

A tape format of the digital recording and reproducing apparatus has, for example, a construction as shown in Fig. 2. That is, from the scanning direction (left edge) of a head (not shown) of the digital recording and reproducing apparatus, the tape format is constructed in accordance with the order of a margin area 1, an ATF and timing sync area, an IBG (inter block gap) area 1, an audio data area, an IBG area 2, a video data area, an IBG area 3, a subcode area, and a margin area 2. The ATF and timing sync area is an area in which data for tracking and data to obtain a synchronization when after-recording are recorded. Between the above-mentioned areas, an amble area is inserted.

IBG is provided as an area to assure a margin for after-recording. Data is not recorded in the IBG. For example, a pulse signal of a frequency which is equal to a bit frequency of the recording data is recorded in each amble area. The pulse signal is used to lock a PLL circuit for a bit clock extraction provided on the reproduction side. Margin 1 and margin 2 are areas to cope with a case where a forming position of the track changes by a jitter.

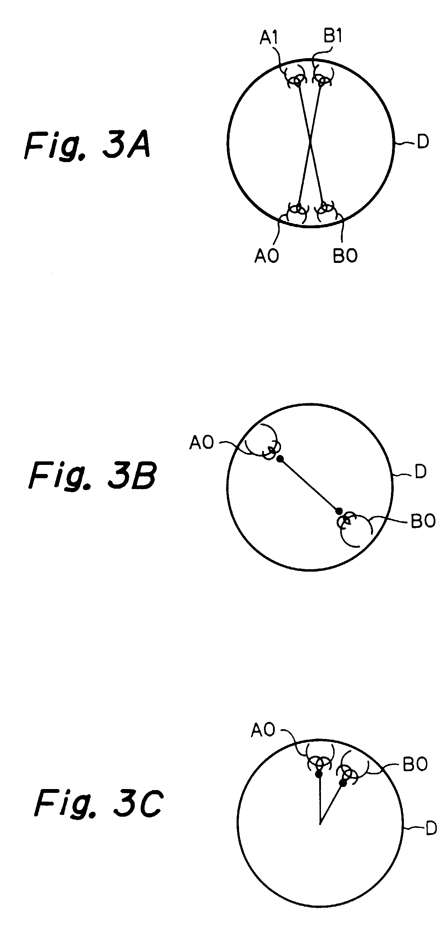

The magnetic tape for the digital recording and reproducing apparatus is scanned by heads shown in Figs. 3A, 3B and 3C. According to the heads shown in Fig. 3A, four heads in which a head A1 and a head B0 face each other and a head B1 and a head A0 correspond to each other are attached to a drum (D). According to the head shown in Fig. 3B, magnetic heads A0 and B0 are attached to a rotary drum (D) in a manner such that the magnetic head A0 faces the magnetic head B0 by 180°. The head shown in Fig. 3C relates to an example in which the magnetic heads A0 and B0 are attached to the rotary drum (D) so as to be arranged at extremely near positions. Such a magnetic head is integratedly constructed and is called a double azimuth head.

Although not shown, the magnetic tape is wound around the peripheral surface of the drum (D) with a wrap angle which is slightly larger than 180° and is fed at a constant speed. A digital video signal is sequentially recorded as an oblique track on the magnetic tape by the magnetic heads A0 and B0. In order to suppress the crosstalk between the neighboring tracks, an extending direction of the gap between the magnetic heads A0 and A1 and an extending direction of the gap between the heads B0 and B1 are made different by a predetermined angle. Thus, the crosstalk between the neighboring tracks can be reduced by the azimuth loss which occurs when reproducing.

When the drum (D) is rotated 9000 times per one minute and the magnetic tape is run at a standard speed (for example, 18.8 mm/sec), the data is recorded at a predetermined position on the tape by the heads. For the recording of the video data of one frame, for instance, 10 tracks are allocated.

For a video data area on the magnetic tape, the video data is recorded at a recording rate of 24.948 Mbps in the normal recording mode (hereinafter, referred to as an SD mode). When the recording is performed in a variable speed recording mode, for example, at a speed which is two times as high as that of the normal recording mode (hereinafter, referred to as an HD mode), data is recorded at a recording rate of 49.896 Mbps. The recording (long-time mode) at a recording data rate (12.474 Mbps) which is 1/2 of the data rate of the recording used in the SD mode is also considered. Further, a digital recording and reproducing apparatus for recording data compressed to various data rates in a range from about 1 Mbps to 10 Mbps is also considered.

When the video data which is supplied at a different data rate, for example, the video data of 5 Mbps is recorded at a recording rate of the above-mentioned long-time mode, the vain data is recorded in the video data area of about 7.5 Mbps (12.474 Mbps - 5 Mbps). That is, although the video data of 12.474 Mbps can be inherently recorded in the video data area, only the data area that is equal to or less than the half of the video data area is actually used. By recording the vain data, the recordable time of the magnetic tape is reduced.

In case of recording general data (discontinuous data such as a computer program or the like) in which errors cannot be corrected with respect to the space or time, it is necessary to verify whether the correct recording has been performed or not. An exclusive-use head other than the recording head is needed for the above verification, so that problems of a complication of a head construction and an increase in costs occur.

International (PCT) Patent Application Publication No. WO 92/09074 discloses a recording and reproducing apparatus according to the pre-characterising part of claim 1 hereof. Specifically, WO 92/09074 discloses a magnetic tape cartridge drive for a host computer. The drive can stop and start in response to the amount of data in a buffer during a data transfer operation. To transfer data between the host computer and the tape, the tape drive is run. The amount of stop and start activity in a predetermined amount of time is monitored and the data transfer rate is slowed in response to the amount of stop and start activity.

Japanese Patent Application Publication No. JP-A-61-139906 discloses a digital tape recorder which can operate in a standard mode and long play mode. In the long play mode, the tape is run at one third of the speed for the standard mode and a pair of heads draw loci at a pitch of one third of that for the standard mode.

According to a first aspect of the invention there is provided a recording and reproducing apparatus for recording digital data on a magnetic tape, the apparatus comprising:
recording head means;
run control means for controlling the running speed of the tape;
memory means for storing input digital data to be recorded;
read/record control means for reading out the digital data stored in the memory means and for controlling the timing of recording on the tape of the digital data read out from the memory means in accordance with the data rate of the input digital data; and
recording verifying means for reproducing and verifying the digital data recorded on the tape;
characterised in that:
the apparatus is capable of recording and reproducing digital data which comprises a video signal having a luminance signal and two colour difference signals;
the recording head means comprises at least a pair of rotary heads having different azimuths;
signal processing means is provided for executing predetermined processing of digital data read out from the memory means;
means is provided for supplying a head switching pulse signal for switching between the rotary heads such that each head can record when the signal is of a predetermined level;
the read/record control means is operative if the input digital signal has a first data rate corresponding to a nominal tape running speed to cause each head to record during every (n)^{th} excursion of the switching pulse signal to said predetermined level;
the run control means and the read/record control means are responsive to the input digital signal having a second data rate which is a predetermined fraction R of said first data rate to control the tape running speed to adopt a value corresponding to R times the nominal tape running speed and to cause each head to record during every (n/R)^{th} excursion of the head switching pulse signal, to said predetermined level;
the recording verifying means is operative at least once to produce the digital data recorded just before by the rotary head having the same azimuth as that of the rotary head which executed said recording just before in a recording stop period during which recording is not performed even when the rotary heads scan the magnetic tape, and for verifying the recording from the reproduced signal;
the recording verifying means is operative again to record the same data together with re-recording identification data onto the magnetic tape when the recording is established as a failure by said verification; and
when said re-recording is executed, the same data, which was previously in portions in a predetermined order, is recorded with the portions in an order opposite to said predetermined order.

According to a second aspect of the invention there is provided a recording and reproducing method in which:
digital data is recorded on a magnetic tape by recording head means;
the running speed of the tape is controlled;
input digital data to be recorded is stored in memory means;
the digital data stored in the memory means is read out and the timing of recording on the tape of the digital data read out from the memory means is controlled in accordance with the data rate of the input digital data; and
the digital data recorded on the tape is reproduced and verified;
characterised in that:
the digital data comprises a video signal having a luminance signal and two colour difference signals;
the recording head means comprises at least a pair of rotary heads having different azimuths;
the digital data read out from the memory means is subjected to predetermined processing;
a head switching pulse signal is supplied for switching between the rotary heads such that each head can record when the signal is of a predetermined level;
in response to the input digital signal having a first data rate corresponding to a nominal tape running speed, each head is caused to record during every (n)^{th} excursion of the switching pulse signal to said predetermined level;
in response to the input digital signal having a second data rate which is a predetermined fraction R of said first data rate, the tape running speed is controlled to adopt a value corresponding to R times the nominal tape running speed and each head is caused to record during every (n/R)^{th} excursion of the head switching pulse signal to said predetermined level;
in a recording stop period during which recording is not performed even when the rotary heads scan the magnetic tape, reproduction of the digital data recorded just before is executed at least once by the rotary head having the same azimuth as that of the rotary head which performed said recording just before and a verification of the recording is executed from the reproduced signal;
when the recording is established as a failure, the same data is again recorded on the magnetic tape together with re-recording identification data; and
when said re-recording is executed, the same data, which was previously recorded in portions in a predetermined order, is recorded with the portions in an order opposite to said predetermined order.

A preferred form of implementation of the invention described hereinbelow provides a recording and reproducing apparatus in which digital video data, computer data, and general data (shopping data, newspaper data, or the like) which is digitally transmitted can be recorded at an optimum data rate, so that the recordable time can be increased.

In the preferred recording and reproducing apparatus, when data at a low rate is intermittently recorded, whether the recording just before has or has not been correctly performed can be verified and a special head is unnecessary.

The invention will now be further described, by way of illustrative and nonlimiting example, with reference to the accompanying drawings, in which:

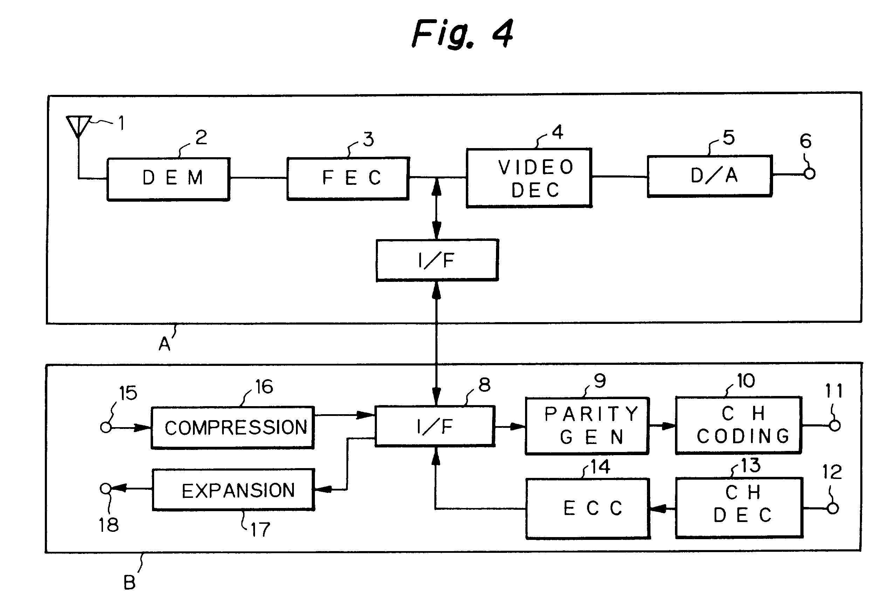

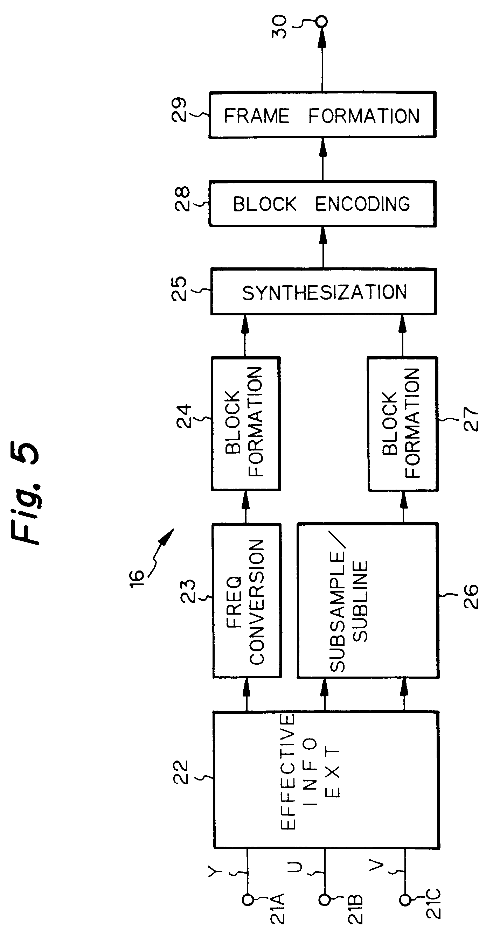

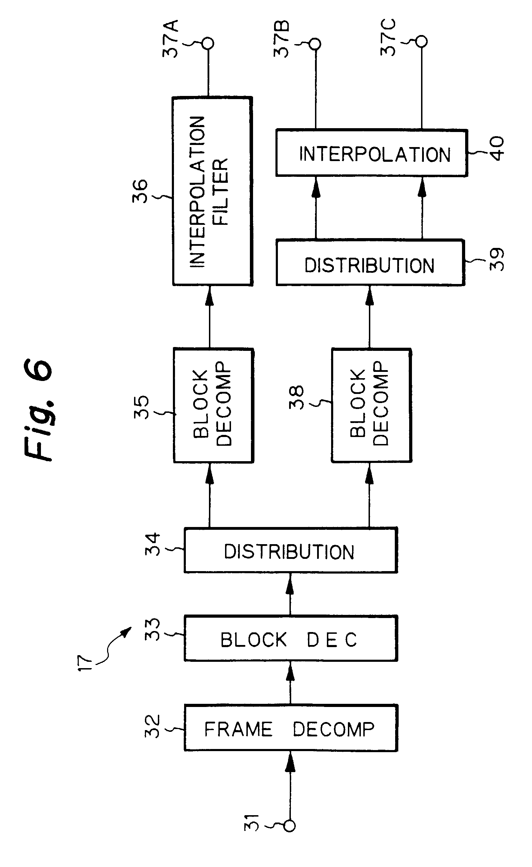

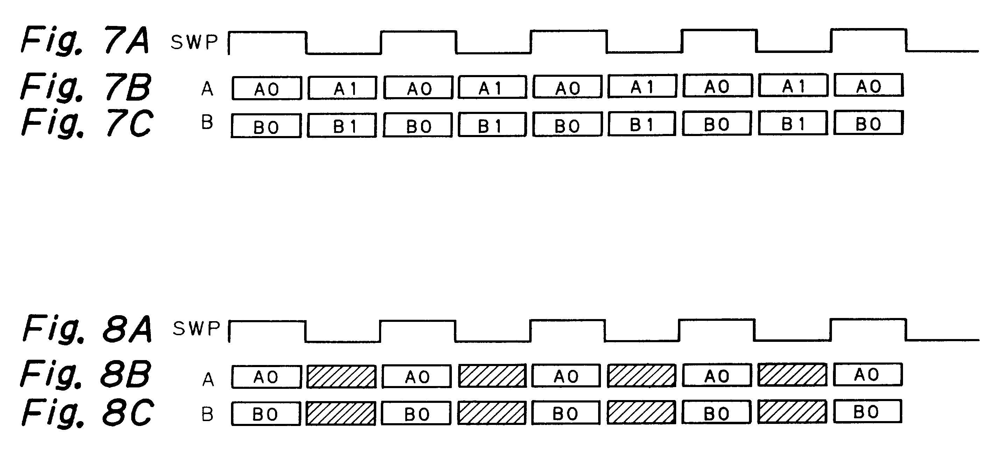

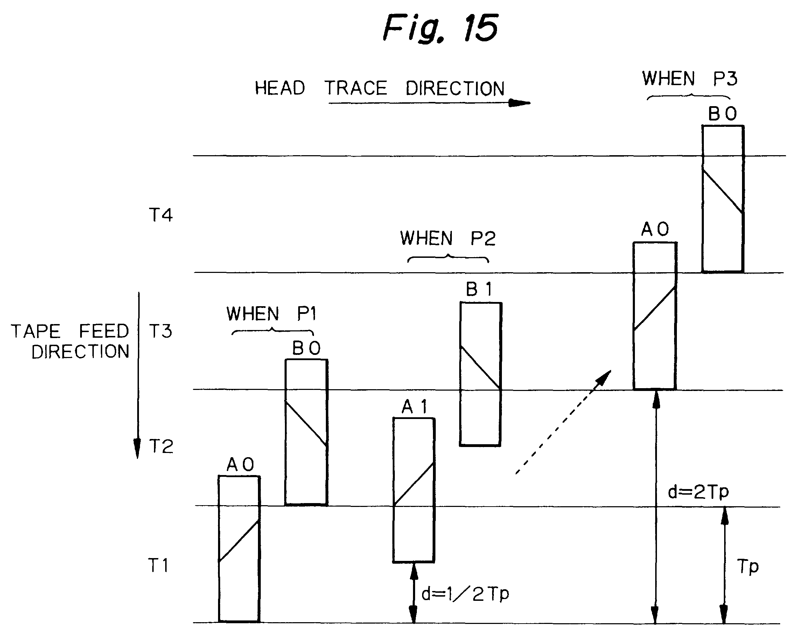

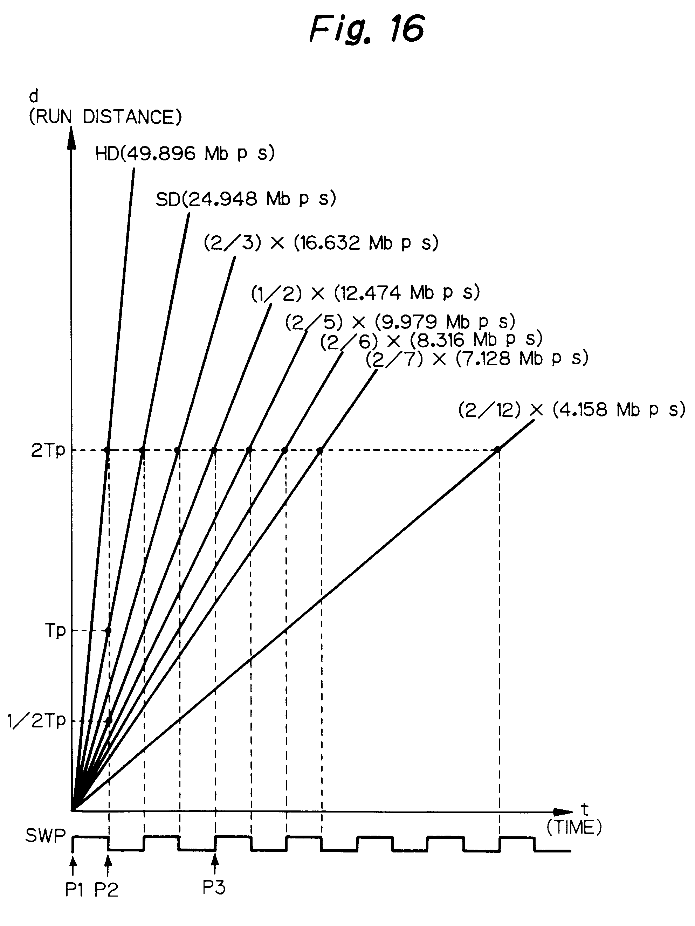

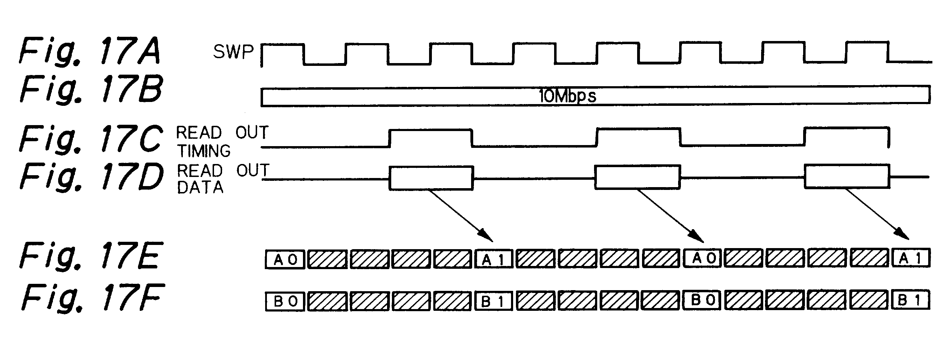

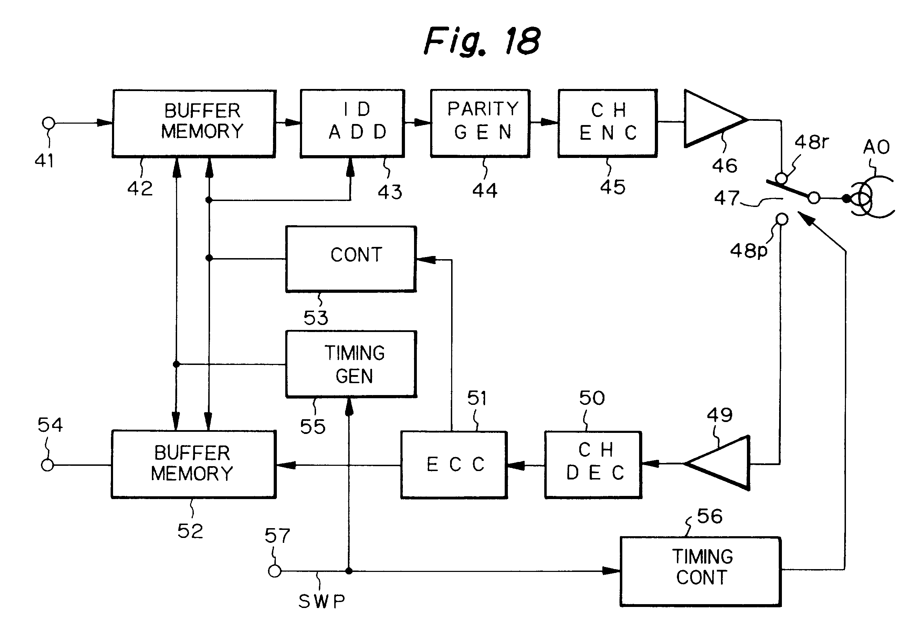

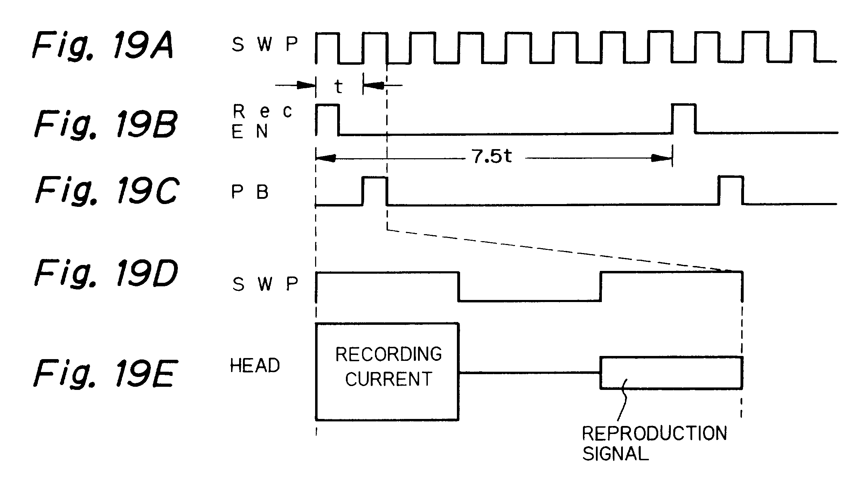

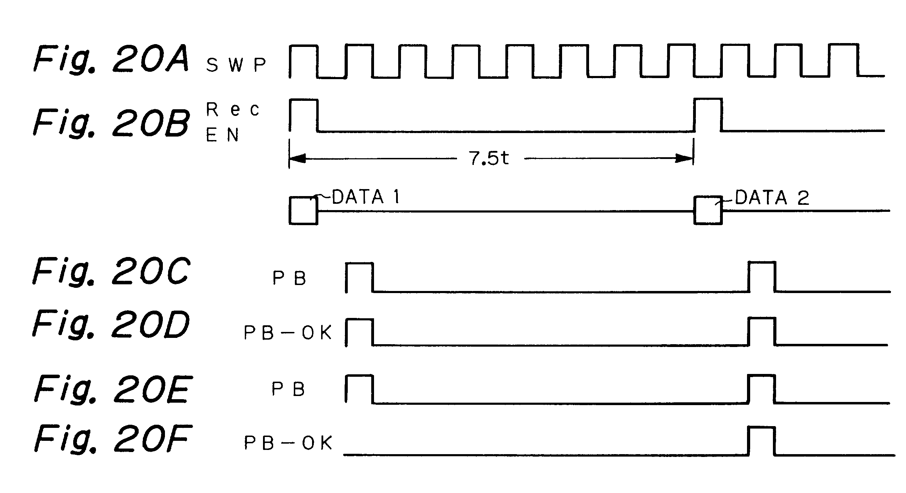

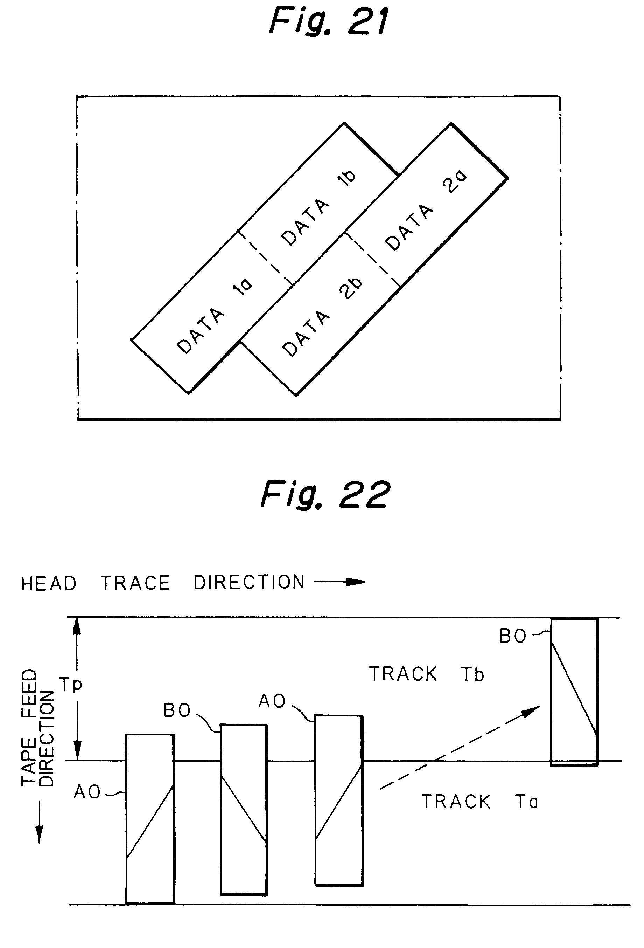

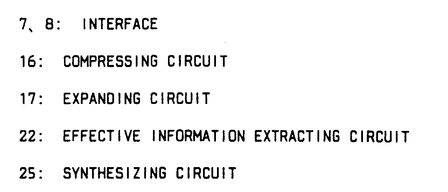

Fig. 1 is a block diagram of a digital recording and reproducing apparatus; Fig. 2 is a diagram showing a tape format of the digital recording and reproducing apparatus; Figs. 3A, 3B and 3C are diagrams showing constructions of heads; Fig. 4 is a block diagram of a digital recording and reproducing apparatus embodying the invention; Fig. 5 is a detailed block diagram of a compressing circuit; Fig. 6 is a detailed block diagram of an expanding circuit; Figs. 7A to 14C are diagrams showing recording methods of data onto a magnetic tape; Fig. 15 is a diagram showing a positional relation between the magnetic heads and the tracks of the magnetic tape; Fig. 16 is a diagram showing a time deviation of a run distance of the magnetic tape; Figs. 17A, 17B, 17C, 17D, 17E and 17F are diagrams showing recording timings; Fig. 18 is a block diagram of a digital recording and reproducing apparatus which verifies whether the recording just before has correctly been performed or not; Figs. 19A, 19B, 19C, 19D and 19E are timing charts for explaining the intermittent recording operation; Figs. 20A, 20B, 20C, 20D, 20E and 20F are timing charts regarding the verification of the recording operation; Fig. 21 is a diagram showing an arrangement order of data upon re-recording; and Fig. 22 is a diagram showing a positional relation between the magnetic heads and the tracks of the magnetic tape.

An embodiment of the invention will now be explained hereinbelow with reference to the drawings. In Fig. 4, a block diagram in the case where the digital recording and reproducing apparatus embodying the invention is connected to a digital television is shown. In Fig. 4, a block shown by (A) denotes a digital television in which a signal compressed by MPEG or the like is received by an antenna 1. Digital video data and audio data obtained from the antenna 1 are supplied to a demodulator 2, by which a base band in the data is demodulated. Output data of the demodulator 2 is supplied to an FEC (Forward Error Correction) circuit 3. In the FEC circuit 3, errors in the data occurred on a transmission path are corrected. Output data of the FEC circuit 3 is expanded in a video decoder 4 and decoded to image data. The image data which is outputted from the video decoder 4 is D/A converted by a D/A converter 5. After that, the converted data is supplied to a video output terminal 6 and is supplied to a monitor (not shown) as analog image data.

When the data inputted through the antenna 1 is recorded to a digital recording and reproducing apparatus shown in (B), the output of the FEC circuit 3 is supplied to an interface 7. The data is converted to a protocol of a digital interface in the interface 7. For example, a buffer (not shown) is provided for the interface 7. The output of the FEC circuit 3 is temporarily stored by the buffer and is supplied to a buffer (not shown) of an interface 8 of the digital recording and reproducing apparatus at a predetermined output timing. The data supplied to the interface 8 is converted to the data train which is suitable for recording and, after that, the data is supplied to a parity generator 9. The data to which a parity necessary for correction of errors which occur upon recording and reproducing was added by the parity generator 9 is modulated by a channel encoder 10 and is recorded on a magnetic tape (not shown) through from a terminal 11 through a recording amplifier and heads.

When the data recorded as mentioned above is reproduced, the data transmitted through the magnetic heads and a reproducing amplifier (not shown) is supplied to a terminal 12. The reproduction data derived through the terminal 12 is demodulated by a channel decoder 13. In an ECC circuit 14, the errors which occurred upon recording and reproducing are corrected for the output data of the channel decoder 13. An output of the ECC circuit 14 is supplied to the video decoder 4 through the interfaces 8 and 7. In the video decoder 4, processes similar to those mentioned above are executed for the supplied data. After the data was converted to the analog image data by the D/A converter 5, the data is supplied to the video output terminal 6.

In the digital recording and reproducing apparatus embodying the invention, there is a case such that present image data is inputted from a video camera (not shown) or the like in addition to the digital data compressed by MPEG or the like as mentioned above. Analog data of the present television system can be inputted from the antenna 1. For example, the analog data inputted from the video camera is supplied to a compressing circuit 16 through a terminal 15. The data compressed by the compressing circuit 16 is transmitted to a recording amplifier through the interface 8, parity generator 9, and channel encoder 10. In case of reproducing the data of the video camera recorded on the tape, the data outputted from the reproducing amplifier is supplied to an expanding circuit 17 through the channel decoder 13, ECC circuit 14, and interface 8. The data to which a predetermined process was executed by the expanding circuit 17 is supplied to the video output terminal 6 through the terminal 18.

In the case where a data rate of the data in the output of the interface 7 in Fig. 4 is lower than a data rate of the digital recording and reproducing apparatus, the data can be recorded by using the digital recording and reproducing apparatus.

A detailed block diagram of the compressing circuit 16 is shown in Fig. 5. In Fig. 5, digital luminance data (Y) and digital color difference signals (U) and (V) which are formed from three primary color signals R, G, and B are supplied from input terminals 21A, 21B, and 21C. In this case, a clock rate of each data is set to 13.5 MHz or 6.75 MHz. The number of bits per sample is set to eight bits.

A data amount is compressed by an effective information extracting circuit 22 for extracting only information in effective areas by eliminating the data in the blanking period from the above data. The luminance data (Y) in an output of the effective information extracting circuit 22 is supplied to a frequency converting circuit 23, by which a sampling frequency is converted to a frequency of 3/4 of 13.5 MHz. The frequency converting circuit 23 comprises, for example, a thin-out filter and is constructed so as not to cause an aliasing distortion. An output of the frequency converting circuit 23 is supplied to a block forming circuit 24, by which the order of the luminance data is converted to the order of blocks. The block forming circuit 24 converts the luminance data to a block structure of (8 x 8) pixels.

Two color difference data (U) and (V) in the output of the effective information extracting circuit 22 are supplied to a subsample and subline circuit 26, by which sampling frequencies are converted to the half of 6.75 MHz, respectively. After that, those data are alternately selected every line and synthesized to data of one channel. Thus, line-sequenced digital color difference data is outputted from the subsample and subline circuit 26.

Output data of the subsample and subline circuit 26 is converted to data of the order of blocks in a block forming circuit 27. The block forming circuit 27 converts the color difference data to the block structure of (8 x 8) pixels in a manner similar to the block forming circuit 24. Output data of the block forming circuits 24 and 27 is supplied to a synthesizing circuit 25.

In the synthesizing circuit 25, the luminance data (Y) and the color difference data (U) and (V) which were converted in accordance with the order of blocks are synthesized to the data of one channel. Output data of the synthesizing circuit 25 is supplied to a block encoding circuit 28. As a block encoding circuit 28, an encoding circuit (ADRC) which is adapted to a dynamic range of every block or a DTC circuit or the like can be applied. Output data of the block encoding circuit 28 is supplied to a frame forming circuit 29. In the frame forming circuit 29, a clock of the image system and a clock of the recording system are exchanged. An output of the frame forming circuit 29 is supplied to the interface 8 through an output terminal 30.

A detailed block diagram of the expanding circuit 17 is shown in Fig. 6.

In Fig. 6, the data which is outputted from the interface 8 is supplied to a frame decomposing circuit 32 though an input terminal 31. In the frame decomposing circuit 32, each component of the block encoding data of the video data is respectively decomposed and its output is supplied to a block decoding circuit 33. In the block decoding circuit 33, reconstructed data corresponding to the original data is decoded on a block unit basis.

The decoded output data of the block decoding circuit 33 is supplied to a distributing circuit 34 and is separated to the luminance data (Y) and the color difference data (U) and (V). The luminance data (Y) is supplied to a block decomposing circuit 35 and the color difference data (U) and (V) are supplied to a block decomposing circuit 38, respectively. In the block decomposing circuits 35 and 38, in a manner opposite to the block forming circuits 24 and 27 on the recording side, the decoded data of the order of blocks is sequentially converted to the data in accordance with the order of raster scan.

The decoded luminance data of the block decomposing circuit 35 is supplied to an interpolation filter 36. In the interpolation filter 36, the sampling rate of the luminance data (Y) is converted from 3 fs (fs denotes a color subcarrier frequency) to 4 fs (4fs = 13.5 MHz). The luminance data (Y) of the interpolation filter 36 is outputted to an output terminal 37A.

Output data of the color difference data (U) and (V) of the distributing circuit 34 are supplied to the block decomposing circuit 38 and is decomposed to the line-sequenced color difference data (U) and (V). The decomposed color difference data (U) and (V) are supplied to an interpolating circuit 40 through a distributing circuit 39. The color difference data (U) and (V) are respectively interpolated in the interpolating circuit 40. In detail, the interpolating circuit 40 interpolates the thinned-out pixel data by using the reconstructed video data. The digital color difference data (U) and (V) whose sampling rates are equal to 4 fs are supplied from the interpolating circuit 40 to output terminals 37B and 37C.

In case of recording the digital data by using the above-mentioned digital recording and reproducing apparatus, the data having a plurality of different recording rates are inputted. That is, the data is recorded at a recording rate of 49.896 Mbps in the HD recording mode. In the SD mode (variable speed recording mode), the video data of 24.948 Mbps is recorded in the video data area of the magnetic tape. A mode (hereinafter, referred to as a first long-time mode) to record at the half rate (12.474 Mbps) of that of the data recorded in case of using the SD mode or a mode to record the data compressed to various data rates in a range from about 1 Mbps to 10 Mbps is also considered.

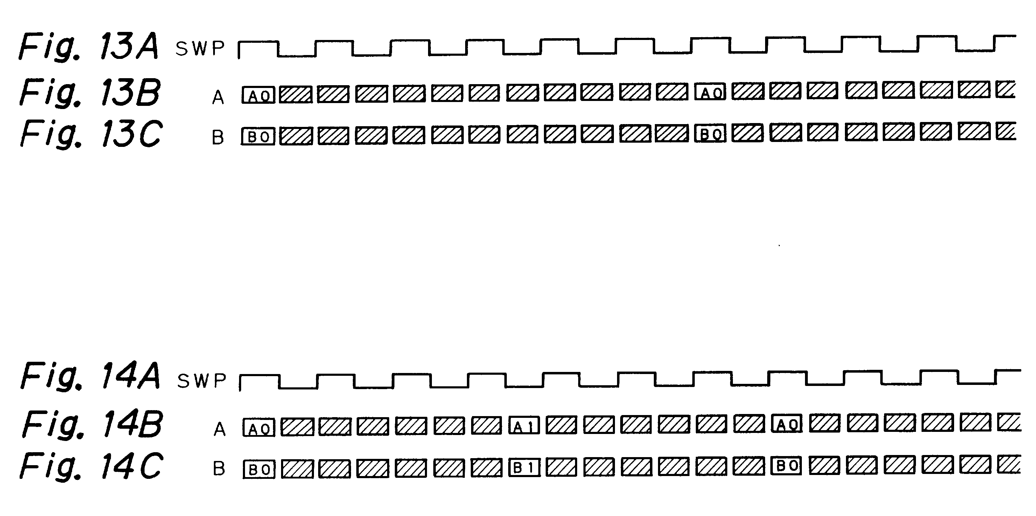

For the various modes as mentioned above, the running speed of the magnetic tape is controlled in correspondence to the input data rate and the data is recorded through the heads in the embodiment. Recording methods of data to the magnetic tape corresponding to those modes are shown in Figs. 7A to 14C. In each of the recording methods of Figs. 7A to 14C, Fig. A denotes a head switching pulse. The digital data is recorded to the magnetic tape by the heads by the switching timing of the head switching pulse. Fig. B shown in each diagram denotes recording data of a head (A). Fig. C indicates recording data of a head (B). Hatched areas in Figures B and C are areas in which no data is recorded. On the other hand, the data is recorded in the areas other than the hatched areas. It is now assumed that heads similar to those shown in Fig. 3A are used as magnetic heads to scan the magnetic tape.

Figs. 7A, 7B and 7C are diagrams showing a recording method in the case where the video data supplied in the HD mode (recording rate of 49.896 Mbps) is recorded on the magnetic tape (assuming now that the tape speed in this instance is equal to 2X). In Figs. 7A, 7B and 7C, data is recorded in the (A) and (B) channels in response to the H level and L level of each head switching pulse. As will be also obviously understood from the diagram, in the first H level interval of the head switching pulse, data A0 is recorded in the (A) channel by the head A0 and data B0 is recorded in the (B) channel by the head B0. In the first (L) level interval of the head switching pulse, the data A1 is recorded in the (A) channel by the head A1 and the data B1 is recorded in the (B) channel by the head B1, respectively. In the second (H) level interval of the head switching pulse, the data A0 is recorded in the (A) channel and the data B0 is recorded in the (B) channel, respectively. Thus, the data which is two times as large as the data in the SD mode can be recorded.

Figs. 8A, 8B and 8C are diagrams showing a recording method in case of recording the video data supplied in the SD mode (recording rate of 24.948 Mbps) onto the magnetic tape (the tape speed in this instance is set to (X)). In Figs. 8A, 8B and 8C, the data A0 is recorded in the (A) channel and the data B0 is recorded in the (B) channel, respectively, in the first (H) level interval of the head switching pulse. In the first (L) level interval of the head switching pulse, no data is recorded in the (A) and (B) channels. In the second (H) level interval of the head switching pulse, the data A0 is recorded in the (A) channel and the data B0 is recorded in the (B) channel, respectively.

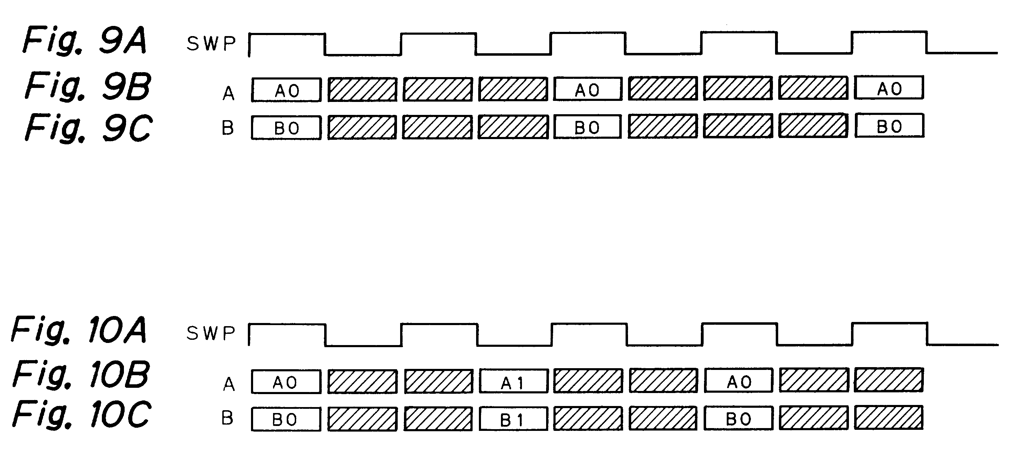

Figs. 9A, 9B and 9C show a recording method in case of recording the video data supplied in the first long-time mode (recording rate of 12.474 Mbps) onto the magnetic tape (the tape speed in this instance is set to X/2). In Figs. 9A, 9B and 9C, the data A0 is recorded in the (A) channel and the data B0 is recorded in the (B) channel, respectively, in the first (H) level interval of the head switching pulse. No data is recorded in the (A) and (B) channels in the first (L) level interval, second (H) level interval, and second (L) level interval of the head switching pulse. In the third (H) level interval of the head switching pulse, the data A0 is recorded in the (A) channel and the data B0 is recorded in the (B) channel, respectively.

A recording method in case of recording the video data supplied in the second long-time mode (recording rate of 16.632 Mbps) onto the magnetic tape (the tape speed in this instance is set to 2X/3) is shown Figs. 10A, 10B and 10C. In Figs. 10A, 10B and 10C, the data A0 is recorded in the (A) channel and the data B0 is recorded in the (B) channel in the first (H) level interval of the head switching pulse. In the first (L) level interval and the second (H) level interval of the head switching pulse, no data is recorded in the (A) and (B) channels. In the subsequent second (L) level interval of the head switching pulse, the data A1 is recorded in the (A) channel and the data B1 is recorded in the (B) channel, respectively.

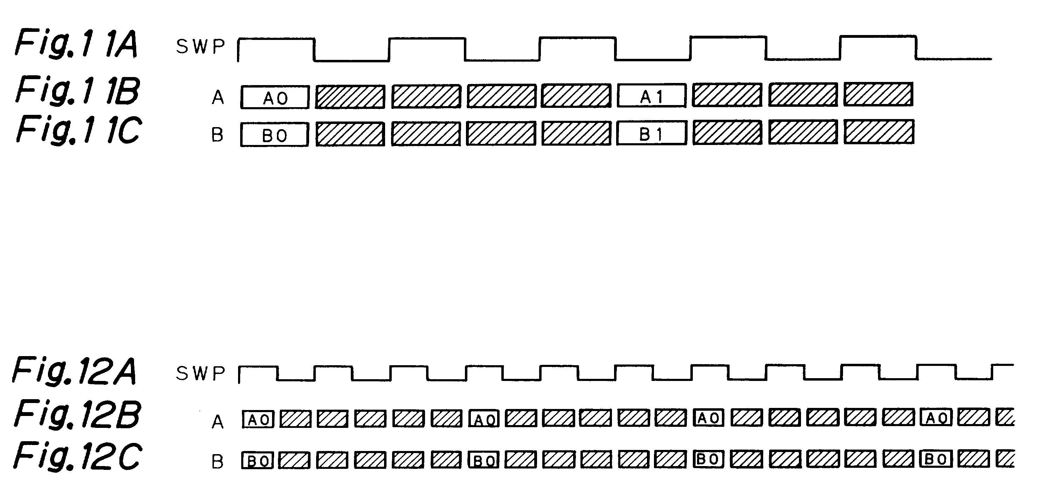

A recording method in case of recording the video data supplied in the third long-time mode (about 9.979 Mbps) onto the magnetic tape (the tape speed in this instance is set to 2X/5) is shown in Figs. 11A, 11B and 11C. In Figs. 11A, 11B and 11C, the data A0 is recorded in the (A) channel and the data B0 is recorded in the (B) channel in the first (H) level interval of the head switching pulse. In the first and second (L) level intervals and the second and third (H) level intervals of the head switching pulse, no data is recorded in the (A) and (B) channels. In the subsequent third (L) level interval of the head switching pulse, the data A1 is recorded in the (A) channel and the data B1 is recorded in the (B) channel, respectively.

A recording method in case of recording the video data supplied in the fourth long-time mode (8.316 Mbps) onto the magnetic tape (the tape speed in this instance is set to X/3) is shown in Figs. 12A, 12B and 12C. In Fig. 12A, 12B and 12C, the data A0 is recorded in the (A) channel and the data B0 is recorded in the (B) channel, respectively, in the first (H) level interval of the head switching pulse. On the other hand, in the first, second, and third (L) level intervals and the second and third (H) level intervals of the head switching pulse, no data is recorded in the (A) and (B) channels. The data A0 is recorded in the (A) channel and the data B0 is recorded in the (B) channel, respectively, in the fourth (H) level interval of the head switching pulse.

A recording method in case of recording the video data supplied in the fifth long-time mode (4.158 Mbps) onto the magnetic tape (the tape speed in this instance is set to X/6) is shown in Figs. 13A, 13B and 13C. In Figs. 13A, 13B and 13C, the data A0 is recorded in the (A) channel and the data B0 is recorded in the (B) channel in the first (H) level interval of the head switching pulse. In the first, second, third, fourth, fifth, and sixth (L) level intervals and the second, third, fourth, fifth, and sixth (H) level intervals of the head switching pulse, no data is recorded in the (A) and (B) channels. The data A0 is recorded in the (A) channel and the data B0 is recorded in the (B) channel, respectively, in the seventh (H) level interval of the head switching pulse.

A recording method in case of recording the video data supplied in the sixth long-time mode (7.128 Mbps) onto the magnetic tape (the tape speed in this instance is set to 2X/7) is shown in Figs. 14A, 14B and 14C. In Figs. 14A, 14B and 14C, the data A0 is recorded in the (A) channel and the data B0 is recorded in the (B) channel, respectively, in the first (H) level interval of the head switching pulse. In the first, second, and third (L) level intervals and the second, third, and fourth (H) level intervals of the head switching pulse, no data is recorded in the (A) and (B) channels. In the fourth (L) level interval of the head switching pulse, the data A1 is recorded in the (A) channel and the data B1 is recorded in the (B) channel, respectively.

Even in the case where the video data is supplied at a plurality of different data rates, by intermittently recording at every predetermined period of the head switching pulse by setting the rotational speed of the drum to a standard value (for example, 9000 rpm) and by setting the tape running speed to v = V x R (V: normal tape speed; 18.8 mm/sec) in correspondence to the data rate ratio (R) (R = X/24.948 Mbps: X denotes a data rate of an input signal), the data can be recorded without using the magnetic tape in vain. By the intermittent recording, the track format and data structure which are identical to those in case of the recording data of the standard rate can be used. A detailed explanation will be made by using Figs. 15 and 16. Fig. 15 shows a positional relation between the magnetic heads and the tracks when the magnetic head approaches the magnetic tape in the first long-time mode (recording mode of 12.474 Mbps) explained in Figs. 9A, 9B and 9C. In Fig. 16, an axis of abscissa denotes time (t) (corresponding to a head switching pulse SWP) and an axis of ordinate indicates a run distance (d) of the tape. A time deviation of the run distance of the tape in each case of the HD mode, SD mode, and the first to sixth long-time modes is shown. In Fig. 15, the magnetic tape is fed at 18.8 x 1/2 = 9.4 mm/sec. At a time point P₁ in Fig. 15, the magnetic head A0 is located at a position in which the lower edge of the head A0 coincides with the lower edge of a track T₁. In the first (H) interval, tracks T₁ and T₂ are formed. At a time point P₂, the lower edge of the magnetic head A1 is located at a position which is moved from the lower edge of the track T₁ only by 1/2 Tₚ (Tₚ: track pitch). The recording cannot be performed at the time point P₂, since the head is located on the tracks T₁ and T₂ formed in the first (H) interval. The recording can be performed from a time point P₃, that is, when the lower edge of the A0 head is away from the lower edge of the track T₁ by 2Tₚ. Therefore, the recording is performed by the magnetic heads A0 and B0 in the third (H) interval. Since the cases in the second to sixth long-time modes have the same reasons, their descriptions are omitted here.

Although the running speed of the magnetic tape has been reduced and the recording has been performed in the above explanation, in place of feeding the magnetic tape at a low running speed in accordance with the data rate to record, the tape can be also fed intermittently. That is, it is also possible to intermittently feed the magnetic tape at a generating timing of the head switching pulse and to record the data only in the area which was intermittently fed (the areas other than the hatched areas in Figs. 7A to 14C).

In Figs. 17A, 17B, 17C, 17D, 17E and 17F, the details of the recording timing by the recording heads in the third long-time mode [9.979 Mbps (recording rate), 2X/5 (tape speed)] are shown. In Figs. 17A, 17B, 17C, 17D, 17E and 17F, the head which is used is switched by the head switching pulse shown in (a). The data rate is set to, for example, 10 Mbps as shown in (b) and is stored into the buffer provided for the interface 7. An output of the interface 7 is supplied to the interface 8. In this instance, the data is supplied from the buffer to the interface 8 at a reading timing as shown in (c). By such a reading timing, data as shown in (d) is read out. The data is recorded on the magnetic tape as shown in (e) and (f) by a predetermined recording method (in this case, the tape speed of 2/5 of that in the normal recording). Information indicative of the data rate is supplied from the interface 7 to the interface 8. The data rate is equal to the standard data rate (25 Mbps) or a data rate other than the standard data rate.

According to the embodiment, when the digital data is supplied at a plurality of different data rates, the magnetic tape is intermittently fed or slow controlled in correspondence to the data rate and the data is recorded. Thus, the magnetic tape can be used without a vain. Therefore, the recording time of the magnetic tape can be increased.

An embodiment in which a verification whether the recording just before has been accurately performed or not is executed when the intermittent recording as mentioned above is performed will now be explained by using Fig. 18.

In the following description, as shown, for example, in Fig. 3B or 3C, a tape head mechanism such that the pair of heads A0 and B0 are attached at a facing interval of 180° and the magnetic tape is wound around the peripheral surface of the drum (D) with a wrap angle which is slightly larger than 180° is used. Fig. 18 shows a construction of one of the heads, for example, A0. Although not shown, a similar construction as that of Fig. 18 is also provided with respect to the other head B0.

In Fig. 18, reference numeral 41 denotes an input terminal to which data to be recorded (general digital data, video data, audio data, or the like) is supplied. An input digital signal is written into a buffer memory 42. The input digital signal is intermittently read out from the buffer memory 42 in accordance with the rate ratio (R) of the recording data for the standard data rate. For instance, when the standard data rate is equal to 25 Mbps and the recording data rate is equal to 5 Mbps, the rate ratio (R) = 1/5 and the digital signal which was time base compressed to about 1/5 is outputted from the buffer memory 42. Although the rate ratio (R) is fixed to the standard data rate (25 Mbps), a data rate other than the standard data rate can be also used. The output signal of the buffer memory 42 is supplied to an ID adding circuit 43. An ID indicating whether the data is the re-recorded data or not or the like is supplied to the ID adding circuit 43. A re-recording ID is added to the digital signal by the ID adding circuit 43 and the resultant digital signal is supplied to a parity forming circuit 44. The ID is recorded in an area for auxiliary data provided in the video area or audio area, a subcode area, or the like. The parity forming circuit 44 forms a parity of error correction code. As an error correction code, a product code or the like can be used. As compared with the error correction coding for the continuous data such as video data, an error correction coding having a stronger ability can be also used with respect to the general digital data.

The recording data from the parity forming circuit 44 is supplied to an encoder 45 of channel modulation and is channel modulated. An output signal of the channel modulating circuit 45 is supplied to the head A0 through a recording amplifier 46 and a recording side terminal 48r of a recording/reproduction change-over switch 47. The output signal is recorded as an oblique track on the magnetic tape by the head A0. As for the data rate, an attention is paid to the data rate of the recording data between the parity forming circuit 44 and the channel modulating circuit 45. In case of the standard data rate, the rate of the data to which an attention is paid is equal to 25 Mbps. For example, in case of the rate ratio R = 5, it is equal to 5 Mbps.

The reproduction signal from the head A0 is supplied to a decoder 50 of channel modulation through a reproducing side terminal 48p of the recording/reproduction change-over switch 47 and a reproducing amplifier 49. A demodulated output of the decoder 50 of channel modulation is supplied to an error correcting circuit 51. The error correcting circuit 51 corrects errors which occurred in the recording and reproducing steps. An output signal of the error correcting circuit 51 is written into a buffer memory 52. A verification result PB-OK of the reproduction signal is generated from the error correcting circuit 51 and is supplied to a controller 53. As will be described hereinlater, the digital signal recorded just before is reproduced and is verified whether the recording has been accurately performed or not and the PB-OK instructs the verification result.

The buffer memory 52 is provided for a rate conversion of the reproduction digital signal and executes the time base expansion in a manner opposite to the case of the recording mode. The ratio of the expansion is set according to the rate ratio (R). The reproduction signal of the original data rate is read out from the buffer memory 52 and is fetched to an output terminal 54. A timing forming circuit 55 and a timing controller 56 are also provided and an RF switching pulse SWP is supplied from an input terminal 57 to those circuits 55 and 56.

The RF switching pulse SWP is a pulse signal which is synchronized with the rotation of the rotary head. When it is now assumed that a rotational frequency of the drum to which the heads are attached is equal to (F), the RF switching pulse SWP has a period (t) of 1/F. For example, the head A0 traces the magnetic tape in a period during which the pulse SWP is at the high level and the head B0 traces the magnetic tape in a period during which the pulse SWP is at the low level. The timing forming circuit 55 controls the writing and reading operations to/from the buffer memories 42 and 52 synchronously with the trace of the heads. The timing controller 56 controls the recording/reproduction change-over switch 47 and a recording/reproduction change over switch (not shown) regarding the head B0 synchronously with the trace of the head.

The intermittent recording operation will be explained with reference to Figs. 19A, 19B, 19C, 19D and 19E. The RF switching pulse SWP has the period (t) of 1/150 (second) when the rotational speed of the drum (D) is equal to 9000 rpm. The head A0 traces the magnetic tape in the period during which the pulse SWP is at the high level and the head B0 traces the magnetic tape in the period during which the pulse SWP is at the low level. For instance, in the case where the rate ratio is equal to 1/15, in the period during which the head A0 traces, after the elapse of a period of 7.5 (t) since a pulse RecEN (recording enable) to allow the recording operation to be executed is made active (high level), the RecEN is made active. In a period during which the RecEN is active, the recording of one track is performed. When the denominator of the rate ratio (R) is an odd number, as will be obviously understood from the above-mentioned example, the heads A0 and B0 alternately perform the recording operation, thereby enabling the azimuths of the neighboring tracks to be made different.

The reproduction signal from the head which has performed the recording just before is extracted in the period during which a PB (reproduction pulse) shown in Figs. 19A, 19B, 19C, 19D and 19E is at the high level. Such recording and reproducing operations can be realized by controlling the recording amplifier 46 by the pulse signal RecEN and by controlling the recording/reproduction change-over switch 47 and reproduction amplifier 49 by the PB. In Figs. 19A, 19B, 19C, 19D and 19E, a recording current flowing in the head and the reproduction signal are partially enlarged.

A case of the intermittent recording where the magnetic head performs the recording once for 15 scans (when the track pitch Tₚ is equal to 10 µm) is shown in Fig. 22. It is now assumed that the construction of the magnetic head is similar to that shown in Fig. 3B or 3C in this case. Fig. 22 shows parts of the neighboring tracks Ta and Tb. The azimuth of the track Ta coincides with the azimuth of the head A0 and the azimuth of the track Tb coincides with that of the head B0. In this instance, the track pitch Tₚ is set to 10 µm. First, the recording is performed to the track Ta by the head A0. Subsequently, the head B0 traces the position which is advanced by (Tₚ/15 = 0.667 µm) by using the track Ta as a reference. The head A0 traces the position which is advanced by (2Tₚ/15). After completion of the traces of 15 times since the track Ta had been recorded, the next recording is executed when the head B0 traces the track Tb.

As mentioned above, in the case where the track pitch is equal to 10 µm, for example, the head A0 records the recording data and the head A0 traces the track to which the recording has been performed just before at the position which is advanced by 0.667 µm. Therefore, as compared with the case of the just on-track having no track deviation, a deviation of 0.667 µm x 2 = 1.333 µm occurs. Assuming now that a C/N ratio in case of the just on-track is equal to 0 dB, the C/N ratio of the reproduction signal which is obtained by the next trace of the recording operation is equal to -1.24 dB. As compared with the case of the just on-track, there is no large deterioration. The verification whether the recording has been correctly performed or not is executed by using the reproduction signal.

Referring to Figs. 20A, 20B, 20C, 20D, 20E and 20F, the verification of the recording operation will be explained. According to the recording operation, the RecEN is set to the high level according to the rate ratio, for example, every 7.5 (t) and the data is recorded during this period of time. It is now assumed that data which is recorded by the head A0 is set to data 1 and data recorded by the head B0 is set to data 2. The data 1 is reproduced by the head A0 and is supplied to the error correcting circuit 51 through the reproduction amplifier 49 and decoder 50 of the channel modulation.

The errors of the reproduced data 1 are corrected in the error correcting circuit 51 and the verification result PB-OK is generated depending on whether the errors which cannot be corrected remain or not. The verification result PB-OK at the high level means that the recording has been correctly performed. The verification result PB-OK at the low level means that the recording has failed. In this case, the verification can be also executed by collating the recording data and the reproduction data. Even when the errors can be corrected, it is also possible to handle as the recording has failed when the amount of errors is equal to or larger than a predetermined amount. The verification result PB-OK is supplied to the controller 53.

In Figs. 20A, 20B, 20C, 20D, 20E and 20F, a case where the PB-OK is set to the high level with respect to the data 1 and a case where the PB-OK isn't set to the high level are shown. In the case where the PB-OK is at the high level, new recording data is recorded as data 2 subsequent to the data 1. On the other hand, when the PB-OK after the recording of the data 1 is at the low level, since it means that the recording of the data 1 has failed, the same data as the data 1 is again recorded as data 2. For the re-recording, the controller 53 controls so that the buffer memory 42 outputs the same data as the previous recording data. Simultaneously, the controller 53 generates an ID indicating that the data is the re-recording data. This ID is added to the data 2 to be re-recorded by the ID adding circuit 43. By the ID indicative of the re-recording data, the data of the previous track of the re-recording data is handled as invalid data at the time of the inherent reproducing operation. In this case, it is also possible to effectively use the correct data in the data of the previous track.

It is also possible to distinguish the continuous data such as video or audio data or the like and the discontinuous data such as data of a computer program or the like and to verify as mentioned above with respect to only the general data. More specifically, an ID indicative of the kind of recording data is supplied to the timing controller 56 and only when the recording data is the general digital data, the recording/reproduction change-over switch 47 is controlled so as to select the terminal 48p on the reproduction side only for a predetermined period. The ID indicative of the kind of data is generated by an input of the user himself, judgment by the system controller, transmission from a broadcasting station in case of the digital CATV, or the like.

Further, as shown in Fig. 21, the order of the data can be also made different among the neighboring tracks when the re-recording is performed. That is, the data 1 to be first recorded is divided into two equal portions and a half portion 1a is recorded in the former half of the track and another half portion 1b is recorded in the latter half of the track. When re-recording the same data, a half portion 2b (this is the same data as 1b) of the re-recording data is recorded in the former half of the track and another half portion 2a (this is the same data as 1a) is recorded in the latter half of the track.

By exchanging the order of the recording data in the longitudinal direction of the track as mentioned above, a possibility such that both of the data 1 and 2 become error data by a scratch in the longitudinal direction of the tape can be reduced. Namely, even when the data 1a and 2b become error data due to the scratch on the lower side of the tape, by combining the data 1b and 2a, the correct data can be obtained. It is not limited to the division of Fig. 21 but the division of a larger number is possible.

In the above-mentioned embodiment, the same data has been again recorded when the recording failed. However, the invention isn't limited to such a case but it is also possible to generate an alarm indicating that the recording has failed. The reproducing operation to verify the recording just before is not limited in the trace period of the head just after the recording. If a necessary C/N ratio can be assured, the reproducing operation can be also executed in the subsequent tracing period for a time until the next recording period.

According to the foregoing disclosure, since the verification of the recording is performed by using the recording stop period when the intermittent recording is executed in order to record the recording data having a data rate which is lower than the standard data rate, the same heads as the recording heads can be used. There is no need to use other heads different from the recording heads, so that there is an advantage such that the construction is simple.

## Claims

1. A recording and reproducing apparatus for recording digital data on a magnetic tape, the apparatus comprising:
recording head means (A0, B0);
run control means for controlling the running speed of the tape;
memory means (42) for storing input digital data to be recorded;
read/record control means (55, 56) for reading out the digital data stored in the memory means (42) and for controlling the timing of recording on the tape of the digital data read out from the memory means (42) in accordance with the data rate of the input digital data; and
recording verifying means (49-51) for reproducing and verifying the digital data recorded on the tape;
characterised in that:
the apparatus is capable of recording and reproducing digital data which comprises a video signal having a luminance signal and two colour difference signals;
the recording head means (A0, B0) comprises at least a pair of rotary heads having different azimuths;
signal processing means (43, 44, 45) is provided for executing predetermined processing of digital data read out from the memory means (42);
means is provided for supplying a head switching pulse signal (SWP) for switching between the rotary heads (A0, B0) such that each head can record when the signal is of a predetermined level;
the read/record control means (55, 56) is operative if the input digital signal has a first data rate corresponding to a nominal tape running speed (X) to cause each head (A0, B0) to record during every (n)^{th} excursion of the switching pulse signal (SWP) to said predetermined level;
the run control means and the read/record control means (55,56) are responsive to the input digital signal having a second data rate which is a predetermined fraction R of said first data rate to control the tape running speed to adopt a value corresponding to R times the nominal tape running speed (X) and to cause each head (A0, B0) to record during every (n/R)^{th} excursion of the head switching pulse signal (SWP) to said predetermined level;
the recording verifying means (49-51) is operative at least once to produce the digital data recorded just before by the rotary head having the same azimuth as that of the rotary head which executed said recording just before in a recording stop period during which recording is not performed even when the rotary heads scan the magnetic tape, and for verifying the recording from the reproduced signal;
the recording verifying means (49-51) is operative again to record the same data together with re-recording identification (ID) data onto the magnetic tape when the recording is established as a failure by said verification; and
when said re-recording is executed, the same data, which was previously in portions in a predetermined order, is recorded with the portions in an order opposite to said predetermined order.

2. Apparatus according to claim 1, which is capable of recording and reproducing digital data which also comprises an audio signal.

3. Apparatus according to claim 1 or claim 2, wherein R is equal to 1/2.

4. Apparatus according to claim 3, wherein each head (A0, B0) is caused to record during every second excursion of the switching pulse signal (SWP) to said predetermined level if the input digital signal has the first data rate, i.e. n=2, whereby each head is caused to record during every fourth excursion of the switching pulse signal (SWP) to said predetermined level, since n/R=4, if the input digital signal has the second data rate.

5. Apparatus according to claim 1 or claim 2, wherein the run control means and the read/record control means (55, 56) are operative as set forth for different input digital signals having respective second data rates having respective different said predetermined fractions R.

6. Apparatus according to claim 5, wherein said respective different said predetermined fractions R are two or more of 1/2, 2/3, 2/5, 1/3, 1/6 and 2/7.

7. Apparatus according to any one of the preceding claims, wherein the number of said portions in said predetermined order is two.

8. A recording and reproducing method in which:
digital data is recorded on a magnetic tape by recording head means (A0, B0);
the running speed of the tape is controlled;
input digital data to be recorded is stored in memory means (42);
the digital data stored in the memory means (42) is read out (55) and the timing of recording on the tape of the digital data read out from the memory means is controlled (56) in accordance with the data rate of the input digital data; and
the digital data recorded on the tape is reproduced and verified;
characterised in that:
the digital data comprises a video signal having a luminance signal and two colour difference signals;
the recording head means (A0, B0) comprises at least a pair of rotary heads having different azimuths;
the digital data read out from the memory means (42) is subjected to predetermined processing (43, 44, 45);
a head switching pulse signal (SWP) is supplied for switching between the rotary heads (A0, B0) such that each head can record when the signal is of a predetermined level;
in response to the input digital signal having a first data rate corresponding to a nominal tape running speed (X), each head is caused to record during every (n)^{th} excursion of the switching pulse signal (SWP) to said predetermined level;
in response to the input digital signal having a second data rate which is a predetermined fraction R of said first data rate, the tape running speed is controlled to adopt a value corresponding to R times the nominal tape running speed (X) and each head is caused to record during every (n/R)^{th} excursion of the head switching pulse signal (SWP) to said predetermined level;
in a recording stop period during which recording is not performed even when the rotary heads scan the magnetic tape, reproduction of the digital data recorded just before is executed at least once by the rotary head having the same azimuth as that of the rotary head which performed said recording just before and a verification of the recording is executed from the reproduced signal;
when the recording is established as a failure, the same data is again recorded on the magnetic tape together with re-recording identification data; and
when said re-recording is executed, the same data, which was previously recorded in portions in a predetermined order, is recorded with the portions in an order opposite to said predetermined order.

9. A method according to claim 8, wherein said digital data also comprises an audio signal.

10. A method according to claim 8 or claim 9, wherein R is equal to 1/2.

11. A method according to claim 10, wherein each head (A0, B0) is caused to record during every second excursion of the switching pulse signal (SWP) to said predetermined level if the input digital signal has the first data rate, i.e. n=2, whereby each head is caused to record during every fourth excursion of the switching pulse signal (SWP) to said predetermined level, since n/R=4, if the input digital signal has the second data rate.

12. A method according to claim 8 or claim 9, which is operative as set forth for different input digital signals having respective second data rates having respective different said predetermined fractions R.

13. A method according to claim 12, wherein said respective different said predetermined fractions R are two or more of 1/2, 2/3, 2/5, 1/3, 1/6 and 2/7.

14. A method according to any one of claims 8 to 13, wherein the number of said portions in said predetermined order is two.

## Patentansprüche

1. Aufzeichnungs- und Wiedergabegerät zur Aufzeichnung von digitalen Daten auf einem Magnetband, mit
einer Aufzeichnungsmagnetkopf-Einrichtung (A0, B0);
einer Laufsteuereinrichtung zum Steuern der Laufgeschwindigkeit des Bandes;
einer Speichereinrichtung (42) zum Speichern von aufzuzeichnenden, digitalen Eingabedaten;
einer Lese-/Aufzeichnungs-Steuereinrichtung (55, 56) zum Auslesen der in der Speichereinrichtung (42) gespeicherten digitalen Daten und zum Steuern des Taktes der Aufzeichnung der aus der Speichereinrichtung (42) ausgelesenen digitalen Daten auf das Band gemäß der Datenrate der digitalen Eingabedaten; und
einer Aufzeichnungs-Prüfeinrichtung (49-51) zur Wiedergabe und Überprüfung der auf dem Band aufgezeichneten digitalen Daten;
dadurch gekennzeichnet, daß
das Gerät zur Aufzeichnung und Wiedergabe von digitalen Daten, die ein Videosignal mit einem Leuchtdichtesignal und zwei Farbdifferenzsignalen aufweisen, geeignet ist;
die Aufzeichnungsmagnetkopf-Einrichtung (A0, B0) wenigstens ein Paar von Drehköpfen mit unterschiedlichen Azimutwinkeln aufweist;
eine Signalverarbeitungseinrichtung (43, 44, 45) zum Ausführen einer vorbestimmten Verarbeitung der aus der Speichereinrichtung (42) ausgelesenen digitalen Daten vorgesehen ist;
eine Einrichtung zum Zuführen eines Drehkopf-Schaltimpulssignales (SWP) zum Umschalten zwischen den Drehköpfen (A0, B0) vorgesehen ist, derart, daß jeder Kopf aufzeichnen kann, wenn das Signal einen bestimmten Pegel hat;
die Lese-/Aufzeichnungs-Steuereinrichtung (55, 56) wirksam ist, wenn das digitale Eingabesignal eine erste Datenrate entsprechend einer Soll-Bandlaufgeschwindigkeit (X) hat, um zu bewirken, daß jeder Kopf (A0, B0) während jeder n-ten Auslenkung des Schaltimpulssignales (SWP) auf den bestimmten Pegel aufzeichnet;
die Laufsteuereinrichtung und die Lese-/Aufzeichnungs-Steuereinrichtung (55, 56) auf das digitale Eingabesignal mit einer zweiten Datenrate ansprechen, die ein bestimmter Bruchteil R der ersten Datenrate ist, um die Bandlaufgeschwindigkeit zu steuern, daß sie einen Wert entsprechend dem R-fachen der Soll-Bandlaufgeschwindigkeit (X) annimmt, und um zu bewirken, daß jeder Kopf (A0, B0) während jeder (n/R)-ten Auslenkung des Drehkopf-Schaltimpulssignales (SWP) auf den bestimmten Pegel aufzeichnet;
die Aufzeichnungs-Prüfeinrichtung (49-51) wenigstens einmal wirksam ist, um die unmittelbar zuvor aufgezeichneten digitalen Daten mittels des Drehkopfes zu erzeugen, der den gleichen Azimutwinkel hat wie derjenige Drehkopf, der die Aufzeichnung unmittelbar zuvor in einer Aufzeichnungsstop-Periode ausgeführt hat, während der eine Aufzeichnung nicht durchgeführt wird, auch wenn die Drehköpfe das Magnetband abtasten, und um die Aufzeichnung aus dem wiedergegebenen Signal zu überprüfen;
die Aufzeichnungs-Prüfeinrichtung (49-51) wieder wirksam ist, um die gleichen Daten zusammen mit Wiederholungs-Kenndaten (ID)auf das Magnetband aufzuzeichnen, wenn die Aufzeichnung durch die Überprüfung als fehlerhaft festgestellt worden ist; und
bei der Ausführung der wiederholten Aufzeichnung die gleichen Daten, die zuvor in Abschnitten in einer bestimmten Reihenfolge vorlagen, mit den Abschnitten in einer Reihenfolge, die umgekehrt zu der bestimmten Reihenfolge ist, aufgezeichnet werden.

2. Gerät nach Anspruch 1,
welches zum Aufzeichnen und Abspielen von digitalen Daten geeignet ist, die auch ein Audiosignal aufweisen.

3. Gerät nach Anspruch 1 oder 2,
dadurch gekennzeichnet,
daß R gleich 1/2 ist.

4. Gerät nach Anspruch 3,
dadurch gekennzeichnet,
daß jeder Kopf (A0, B0) während jeder zweiten Auslenkung des Schaltimpulssignales (SWP) auf den bestimmten Pegel zum Aufzeichnen veranlaßt wird, wenn das digitale Eingabesignal die erste Datenrate hat, d.h. n=2 ist, während jeder Kopf während jeder vierten Auslenkung des Schaltimpulssignales (SWP) auf den bestimmten Pegel zum Aufzeichnen veranlaßt wird, da n/R=4 ist, wenn das digitale Eingabesignal die zweite Datenrate hat.

5. Gerät nach Anspruch 1 oder 2,
dadurch gekennzeichnet,
daß die Laufsteuereinrichtung und die Lese-/Aufzeichnungs-Steuereinrichtung (55, 56) wie dargelegt für unterschiedliche digitale Eingabesignale mit jeweils der zweiten Datenrate mit jeweils unterschiedlichen der bestimmten Bruchteile R wirksam sind.

6. Gerät nach Anspruch 5,
dadurch gekennzeichnet,
daß die jeweils unterschiedlichen der bestimmten Bruchteile R wenigstens zwei aus 1/2, 2/3, 2/5, 1/3, 1/6 und 2/7 sind.

7. Gerät nach einem der vorhergehenden Ansprüche,
dadurch gekennzeichnet,
daß die Anzahl der Abschnitte in der bestimmten Reihenfolge zwei ist.

8. Verfahren zur Aufzeichnung und Wiedergabe, bei dem
digitale Daten mittels einer Aufzeichnungsmagnetkopf-Einrichtung (A0, B0) auf einem Magnetband aufgezeichnet werden;
die Laufgeschwindigkeit des Bandes gesteuert wird;
die aufzuzeichnenden, digitalen Eingabedaten in einer Speichereinrichtung (42) gespeichert werden;
die in der Speichereinrichtung (42) gespeicherten digitalen Daten ausgelesen und die zeitliche Abstimmung der Aufzeichnung der aus der Speichereinrichtung ausgelesenen digitalen Daten auf das Band gemäß der Datenrate der digitalen Eingabedaten gesteuert (56) wird; und
die auf dem Band aufgezeichneten digitalen Daten wiedergegeben und überprüft werden;
dadurch gekennzeichnet, daß
die digitalen Daten ein Videosignal mit einem Leuchtdichtesignal und zwei Farbdifferenzsignalen aufweisen;
die Aufzeichnungsmagnetkopf-Einrichtung (A0, B0) wenigstens ein Paar von Drehköpfen mit unterschiedlichen Azimutwinkeln aufweist;
die aus der Speichereinrichtung (42) ausgelesenen digitalen Daten einer bestimmten Signalverarbeitung (43, 44, 45) unterzogen werden;
ein Drehkopf-Schaltimpulssignal (SWP) zum Umschalten zwischen den Drehköpfen (A0, B0) derart zugeführt wird, daß jeder Kopf aufzeichnen kann, wenn das Signal einen bestimmten Pegel hat;
infolge des digitalen Eingabesignals mit einer ersten Datenrate entsprechend einer Soll-Bandlaufgeschwindigkeit (X) jeder Kopf (A0, B0) veranlaßt wird, während jeder n-ten Auslenkung des Schaltimpulssignales (SWP) auf den bestimmten Pegel aufzuzeichnen;
infolge des digitalen Eingabesignals mit einer zweiten Datenrate, die ein bestimmter Bruchteil R der ersten Datenrate ist, die Bandlaufgeschwindigkeit gesteuert wird, daß sie einen Wert entsprechend dem R-fachen der Soll-Bandlaufgeschwindigkeit (X) annimmt, und jeder Kopf (A0, B0) veranlaßt wird, während jeder (n/R)-ten Auslenkung des Drehkopf-Schaltimpulssignales (SWP) auf den bestimmten Pegel aufzuzeichnen;
in einer Aufzeichnungsstop-Periode, während der eine Aufzeichnung nicht durchgeführt wird, auch wenn die Drehköpfe das Magnetband abtasten, eine Wiedergabe der unmittelbar zuvor aufgezeichneten digitalen Daten wenigstens einmal mittels des Drehkopfes ausgeführt wird, der den gleichen Azimutwinkel hat wie derjenige Drehkopf, der die Aufzeichnung unmittelbar zuvor durchgeführt hat, und eine Überprüfung der Aufzeichnung aus dem wiedergegebenen Signal ausgeführt wird;
wenn die Aufzeichnung als fehlerhaft festgestellt worden ist, die gleichen Daten wieder zusammen mit Wiederholungs-Kenndaten auf das Magnetband aufgezeichnet werden; und
wenn die wiederholte Aufzeichnung ausgeführt wird, die gleichen Daten, die zuvor in Abschnitten in einer bestimmten Reihenfolge vorlagen, mit den Abschnitten in einer Reihenfolge, die umgekehrt zu der bestimmten Reihenfolge ist, aufgezeichnet werden.

9. Verfahren nach Anspruch 8,
dadurch gekennzeichnet,
daß die digitalen Daten auch ein Audiosignal aufweisen.

10. Verfahren nach Anspruch 8 oder 9,
dadurch gekennzeichnet,
daß R gleich 1/2 ist.

11. Verfahren nach Anspruch 10,
dadurch gekennzeichnet,
daß jeder Kopf (A0, B0) während jeder zweiten Auslenkung des Schaltimpulssignales (SWP) auf den bestimmten Pegel zum Aufzeichnen veranlaßt wird, wenn das digitale Eingabesignal die erste Datenrate hat, d.h. n=2 ist, während jeder Kopf während jeder vierten Auslenkung des Schaltimpulssignales (SWP) auf den bestimmten Pegel zum Aufzeichnen veranlaßt wird, da n/R=4 ist, wenn das digitale Eingabesignal die zweite Datenrate hat.

12. Verfahren nach Anspruch 8 oder 9,
dadurch gekennzeichnet,
daß das Verfahren wie dargelegt für unterschiedliche digitale Eingabesignale mit jeweils der zweiten Datenrate mit jeweils unterschiedlichen der bestimmten Bruchteile R wirksam ist.

13. Verfahren nach Anspruch 12,
dadurch gekennzeichnet,
daß die jeweils unterschiedlichen der bestimmten Bruchteile R wenigstens zwei aus 1/2, 2/3, 2/5, 1/3, 1/6 und 2/7 sind.

14. Verfahren nach einem der Ansprüche 8 bis 13,
dadurch gekennzeichnet,
daß die Anzahl der Abschnitte in der bestimmten Reihenfolge zwei ist.

## Revendications

1. Appareil d'enregistrement et de reproduction pour enregistrer des données numériques sur une bande magnétique, l'appareil comprenant :
un moyen de tête d'enregistrement (A0, B0) ;
un moyen de commande de défilement pour commander la vitesse de défilement de la bande ;
un moyen de mémoire (42) pour stocker des données numériques d'entrée à enregistrer ;
un moyen de commande de lecture/d'enregistrement (55, 56) pour extraire les données numériques stockées dans le moyen de mémoire (42) et pour commander la temporisation d'enregistrement sur la bande des données numériques extraites du moyen de mémoire (42) selon le débit de données des données numériques d'entrée ; et
un moyen de vérification d'enregistrement (49-51) pour reproduire et vérifier les données numériques enregistrées sur la bande ;
caractérisé en ce que :
l'appareil est capable d'enregistrer et de reproduire des données numériques qui comprennent un signal vidéo ayant un signal de luminance et deux signaux de différence de couleur ;
le moyen de tête d'enregistrement (A0, B0) comprend au moins une paire de têtes tournantes ayant différents azimuts ;
un moyen de traitement de signal (43, 44, 45) est fourni pour exécuter un traitement prédéterminé des données numériques extraites du moyen de mémoire (42) ;
un moyen est prévu pour fournir un signal d'impulsion de commutation de tête (SWP) pour commuter entre les têtes tournantes (A0, B0) de sorte que chaque tête peut enregistrer lorsque le signal est d'un niveau prédéterminé ;
le moyen de commande de lecture/d'enregistrement (55, 56) est fonctionnel si le signal numérique d'entrée a un premier débit de données correspondant à une vitesse de défilement de bande nominale (X) pour forcer chaque tête (A0, B0) à enregistrer pendant chaque (n)-ième excursion du signal d'impulsion de commutation (SWP) audit niveau prédéterminé ;
le moyen de commande de défilement et le moyen de commande de lecture/d'enregistrement (55, 56) sont sensibles au signal numérique d'entrée ayant un second débit de données qui est une fraction prédéterminée R dudit premier débit de données pour commander la vitesse de défilement de bande pour adopter une valeur correspondant à R fois la vitesse de défilement de bande nominale (X) et pour forcer chaque tête (A0, B0) à enregistrer pendant chaque (n/R) ième excursion du signal d'impulsion de commutation de tête (SWP) audit niveau prédéterminé ;
le moyen de vérification d'enregistrement (49-51) est fonctionnel au moins une fois pour produire les données numériques enregistrées juste avant par la tête tournante ayant le même azimut que celui de la tête tournante qui exécutait ledit enregistrement juste avant dans une période d'arrêt d'enregistrement pendant laquelle l'enregistrement n'est pas réalisé même si les têtes tournantes balayent la bande magnétique, et pour vérifier l'enregistrement du signal reproduit ;
le moyen de vérification d'enregistrement (49-51) est de nouveau fonctionnel pour enregistrer les mêmes données en même temps que les données d'identification (ID) de réenregistrement sur la bande magnétique lorsque l'enregistrement est établi comme un défaut par ladite vérification ; et
lorsque ledit réenregistrement est exécuté, les mêmes données, qui étaient préalablement dans des parties dans un ordre prédéterminé, sont enregistrées avec les parties dans un ordre opposé audit ordre prédéterminé.

2. Appareil selon la revendication 1, qui est capable d'enregistrer et de reproduire des données numériques qui comprennent aussi un signal audio.

3. Appareil selon la revendication 1 ou la revendication 2, dans lequel R est égal à 1/2.

4. Appareil selon la revendication 3, dans lequel chaque tête (A0, B0) est forcée à enregistrer pendant chaque seconde excursion du signal d'impulsion de commutation (SWP) audit niveau prédéterminé si le signal numérique d'entrée a le premier débit de données, c'est à dire n = 2, de sorte que chaque tête est forcée à enregistrer pendant chaque quatrième excursion du signal d'impulsion de commutation (SWP) audit niveau prédéterminé, car n/R = 4, si le signal numérique d'entrée a le second débit de données.

5. Appareil selon la revendication 1 ou la revendication 2, dans lequel le moyen de commande de défilement et le moyen de commande de lecture/d'enregistrement (55, 56) sont fonctionnels comme exposé pour différents signaux numériques d'entrée ayant des seconds débits de données ayant lesdites différentes fractions respectives prédéterminées R.

6. Appareil selon la revendication 5, dans lequel lesdites différentes fractions respectives prédéterminées R sont deux ou plus de 1/2, 2/3, 2/5, 1/3, 1/6 et 2/7.

7. Appareil selon l'une quelconque des revendications précédentes, dans lequel le nombre desdites parties dans ledit ordre prédéterminé est deux.

8. Procédé d'enregistrement et de reproduction dans lequel :
les données numériques sont enregistrées sur une bande magnétique par le moyen de tête d'enregistrement (A0, B0) ;
la vitesse de défilement de la bande est commandée ;
les données numériques d'entrée à enregistrer sont stockées dans le moyen de mémoire (42) ;
les données numériques stockées dans le moyen de mémoire (42) sont extraites (55) et la temporisation d'enregistrement sur la bande des données numériques extraites par le moyen de mémoire est commandé (56) selon le débit de données des données numériques d'entrée ; et
les données numériques enregistrées sur la bande sont reproduites et vérifiées ;
caractérisé en ce que :
les données numériques comprennent un signal vidéo ayant un signal de luminance et deux signaux de différence de couleur ;
le moyen de tête d'enregistrement (A0, B0) comprend au moins une paire de têtes tournantes ayant différents azimuts ;
les données numériques extraites du moyen de mémoire (42) sont soumises à un traitement prédéterminé (43, 44, 45) ;
un signal d'impulsion de commutation de tête (SWP) est fourni pour commuter entre les têtes tournantes (A0, B0) pour que chaque tête puisse enregistrer lorsque le signal est d'un niveau prédéterminé ;
en réponse au signal numérique d'entrée ayant un premier débit de données correspondant à une vitesse de défilement de bande nominale (X), chaque tête est forcée à enregistrer pendant chaque (n)-ième excursion du signal d'impulsion de commutation (SWP) audit niveau prédéterminé ;
en réponse au signal numérique d'entrée ayant un second débit de données qui est une fraction prédéterminée R dudit premier débit de données, la vitesse de défilement de bande est commandée pour adopter une valeur correspondant à R fois la vitesse de défilement de bande nominale (X) et chaque tête est forcée à enregistrer pendant chaque (n/R)-ième excursion du signal d'impulsion de commutation de tête (SWP) audit niveau prédéterminé ;
dans une période d'arrêt d'enregistrement pendant laquelle l'enregistrement n'est pas réalisé même si les têtes tournantes balayent la bande magnétique, reproduction des données numériques enregistrées juste avant que soit exécuté au moins une fois par la tête tournante ayant le même azimut que celui de la tête tournante qui réalisait ledit enregistrement juste avant et une vérification de l'enregistrement est exécutée à partir du signal reproduit ;
lorsque l'enregistrement est établi comme un défaut, les mêmes données sont de nouveau enregistrées sur la bande magnétique en même temps que les données d'identification de réenregistrement; et
lorsque ledit réenregistrement est exécuté, les mêmes données, qui étaient précédemment enregistrées dans des parties dans un ordre prédéterminé, sont enregistrées avec les parties dans un ordre opposé audit ordre prédéterminé.

9. Procédé selon la revendication 8, dans lequel lesdites données numériques comprennent aussi un signal audio.

10. Procédé selon la revendication 8 ou la revendication 9, dans lequel R est égal à 1/2.

11. Procédé selon la revendication 10, dans lequel chaque tête (A0, B0) est forcée à enregistrer pendant chaque seconde excursion du signal d'impulsion de commutation (SWP) audit niveau prédéterminé si le signal numérique d'entrée a le premier débit de données, c'est à dire n = 2, de sorte que chaque tête est forcée à enregistrer pendant chaque quatrième excursion du signal d'impulsion de commutation (SWP) audit niveau prédéterminé, puisque n/R = 4, si le signal numérique d'entrée a le second débit de données.

12. Procédé selon la revendication 8 ou la revendication 9, qui est fonctionnel comme exposé pour différents signaux numériques d'entrée ayant des seconds débits de données respectifs ayant desdites différentes fractions respectives prédéterminées R.

13. Procédé selon la revendication 12, dans lequel lesdites fractions prédéterminées respectives R sont deux ou plus de 1/2 2/3, 2/5, 1/3, 1/6 et 2/7.

14. Procédé selon l'une quelconque des revendications 8 à 13, dans lequel le nombre desdites parties dans ledit ordre prédéterminé est deux.
